# EUROPÄISCHE PATENTSCHRIFT

(11) **EP 0 498 323 B1**
(45) Veröffentlichungstag und Bekanntmachung des Hinweises auf die Patenterteilung: **07.12.1994**
(21) Anmeldenummer: 92101684.6
(22) Anmeldetag: 01.02.1992
(51) Int. Cl.: F16L 21/00

(54) **Vorrichtung zum abgedichteten Verbinden der glattzylindrischen Enden zweier Rohre**
Sealed connection device for smooth pipe ends
Dispositif de connexion étanche pour embouts de tuyaux lisses

(30) Priorität: 07.02.1991 DE 4103702
(43) Veröffentlichungstag der Anmeldung: 12.08.1992
(73) Patentinhaber: MERO-Werke Dr.-Ing. Max Mengeringhausen GmbH & Co., D-97064 Würzburg (DE)
(72) Erfinder: Knappe, Dieter, W-8702 Zell (DE)
(74) Vertreter: Böck, Bernhard

(56) Entgegenhaltungen:
- DE-B- 1 500 774
- DE-C- 897 498
- DE-C- 3 404 739
- FR-A- 2 461 187
- GB-A- 2 186 651

## Beschreibung

Die Erfindung bezieht sich auf eine Vorrichtung zum abgedichteten Verbinden der glattzylindrischen Enden zweier Rohre, mit einer Dichtmanschette und einem Schellenband zum Kontrahieren der Dichtmanschette, das mit einer mittigen umlaufenden Sicke und an seinen Enden mit im wesentlichen radial nach außen abstehenden Spannbacken versehen ist, durch die sich eine Spannschraube zur Kontraktion des Schellenbandes erstreckt, wobei die Spannbacken durch die Spannschraube quer übergreifende Bügel mit nach außen abgewinkelten Befestigungslaschen gebildet sind, die am Schellenband angeschweißt sind und gegen das Schellenband abgewinkelte Flansche aufweisen.

Eine derartige Rohr-Verbindungsvorrichtung ist durch die DE-PS 34 04 739 bekannt. Die abgerundeten bzw. im Schnitt bogenförmigen Bügel der beiden Spannbacken übergreifen bei dieser Vorrichtung unmittelbar die Spannschraube, deren Kopf, ggf. unter Zwischenschaltung einer Beilagscheibe, am äußeren Stirnrand des Bügels der einen Spannbacke und deren Mutter am äußeren Stirnrand des Bügels der anderen Spannbacke anliegt bzw. angreift, wenn die Spannschraube zur Kontraktion des Schellenbandes gedreht wird. Die Mutter der Spannschraube besteht aus einer vierkantigen Ausführung und zu ihrer Drehsicherung greift sie mit einer Kante in die relativ schmale mittige, umlaufende Sicke des Schellenbandes ein. Es hat sich jedoch gezeigt, daß diese Drehsicherung ungenügend ist, denn beim Anziehen der Spannschraube z.B. mittels eines motorischen Drehschraubers besteht die Gefahr, daß die Spannschraube durch den Bügel der einen Spannbacke so weit hindurch geschoben wird, daß die relativ flache Mutter mit ihrer einen Kante aus der umlaufenden mittleren Sicke des Schellenbandes heraustritt und dadurch "frei" wird. Schließlich kann es bei dieser bekannten Lösung vorkommen, daß sich die spannschraube beim Anziehen verbiegt, da sie durch die Bügel der beiden Spannbacken ungenügend geführt ist und ußerdem besteht die Gefahr, daß das Gewinde der Spannschraube durch den Bügel des einen Spannbackens beschädigt wird.

Der Erfindung liegt die Aufgabe zugrunde, die obigen Nachteile zu vermeiden und eine Vorrichtung zum Verbinden zweier Rohre zu schaffen, deren Schellenband bei der Montage zuverlässig kontraktiert werden kann, ohne daß die Gefahr besteht, daß das Gewinde der Spannschraube beschädigt wird oder daß sich diese gar verbiegt.

Gemäß der Erfindung wird obige Aufgabe dadurch gelöst, daß
a) der Bügel von wenigstens einem der zwei Spannbacken kantig ausgebildet ist und eine Mutter für die Spannschraube mit entsprechend kantigem Außenumfang drehfest aufnimmt,
b) die Mutter für die Spannschraube mit einem Außen-Ringbund versehen ist, der am äußeren Stirnrand des einen kantigen Bügels anliegt und in die mittige umlaufende Sicke des Schellenbandes eingreift,
c) der Bügel des anderen Spannbackens eine Führungshülse für die Spannschraube aufnimmt und die Führungshülse einen Außen-Ringbund aufweist, welcher am äußeren Stirnrand dieses Bügels anliegt und in die mittige umlaufende Sicke des Schellenbandes eintaucht und
d) das Schellenband randseitig je eine, im Vergleich zur mittigen Sicke schmale umlaufende Sicke aufweist, in welche die Flansche an den Befestigungslaschen der Spannbacken eingreifen.

Die kantige Mutter für die Spannschraube sitzt somit praktisch über ihre gesamte Länge in dem kantigen Bügel des einen Spannbackens. Die so erzeugte Drehsicherung der Mutter für die Spannschraube ist auch dann wirksam, wenn die Spannschraube beim Anziehen unter dem Druck z.B. eines Motor-Drehschraubers anfänglich unter Mitnahme der Mutter verschoben wird, denn ein Teil der Mutter bleibt dabei stets in Eingriff mit dem kantigen Bügel. Da ferner der Gewindeschaft der Spannschraube bei deren Drehung in der Mutter und in der Führungshülse geführt ist, ist eine Gewindebeschädigung, wie beim Stand der Technik möglich, ausgeschlossen und die Mutter verhindert in Verbindung mit der Führungshülse auch eine Verbiegung der Spannschraube beim Anziehvorgang. Der Außen-Ringbund an der Führungshülse bildet dabei vorteilhaft eine Auflage für die "Mitnehmer-Nuß" z.B. eines Motor-Drehschraubers, welche dabei in die relativ breite mittige Sicke des Schellenbandes eingreifen kann. Es wird bemerkt, daß zum Anziehen der Spannschraube eine übliche Mitnehmer-Nuß für einen Motor-Drehschrauber verwendet werden kann. Da ferner die gegen das Schellenbanc abgewinkelte Flansche an den Befestigungslaschen der Spannbacken in randseitige, relativ schmale umlaufende Sicken des Schellenbandes eingreifen, ist bei der Kontraktion des Schellenbandes sichergestellt, daß sich dessen Ränder nicht aufbiegen. Dies ist auch deshalb von Bedeutung, da diese randseitigen Sicken bei gespanntem Schellenband über die Dichtmanschette die Rohre festhalten und zur Quersteifigkeit der Rohrverbindung beitragen.

Ausgestaltungen der Erfindung gehen aus den Unteransprüchen hervor. So ist zweckmäßig auch der die Führungshülse für die Spannschraube aufnehmende Bügel des anderen Spannbackens kantig ausgebildet, und die Führungshülse weist einen entsprechend angepaßten kantigen Außenumfang auf. Auf diese Weise wird die Fertigung vereinfacht, denn es können an beiden Enden des Schellenbandes gleichartige Spannbacken befestigt werden. Die Führungshülse kann vorteilhaft aus einer einfach aufgebohrten Mutter mit Außen-Ringbund für die Spannschraube bestehen. Die Führungshülse ist hier also gleichfalls drehfest im Bügel angeordnet.

Nach noch einer weiteren Ausgestaltung der Erfindung sind die Bügel der Spannbacken derart dreikantig ausgebildet, daß sie eine Sechskant-Mutter bzw. eine Führungshülse mit einem entsprechend sechskantigen Außenumfang an je vier Seiten passend übergreifen, während der restliche Teil der Sechskant-Mutter bzw. Führungshülse sich im wesentlichen in die mittige Sicke des Schellenbandes erstreckt. Diese Ausführungsform ermöglicht vorteilhaft die Verwendung handelsüblicher Sechskant-Muttern mit Außen-Ringbund.

Wenn sich die Befestigungslaschen der Spannbacken in entgegengesetzten Richtungen über die Bügel hinaus um ein Mehrfaches der Bügelbreite in Umfangsrichtung des Schellenbandes erstrecken, können vorteilhaft die Schweißpunkte in Umfangsrichtung des Schellenbandes in relativ großen Abständen angeordnet werden, wodurch wiederum die Qualität der Schweißverbindung zwischen Spannbacken und Schellenband verbessert wird. Denn bei relativ geringem Abstand der Schweißpunkte in Umfangsrichtung können Materialschäden an dem in der Regel aus Edelstahl bestehenden Schellenband auftreten.

Die Erfindung wird anschließend anhand der Zeichnungen eines Ausführungsbeispiels erläutert. Es zeigen:
- Fig. 1: eine Stirnansicht der erfindungsgemäßen Verbindungsvorrichtung ohne die zu verbindenden Rohre im entspannten Zustand;
- Fig. 2: eine Schnittansicht entlang der Linie II-II in Fig. 1;
- Fig. 3: eine Schnittansicht entlang der Linie III-III in Fig. 1;
- Fig. 4: eine Draufsicht von einem Teil der Verbindungsvorrichtung im Bereich der beiden Spannbacken;
- Fig. 5: eine Stirnansicht eines Spannbackens;
- Fig. 6: eine Draufsicht des Spannbackens der Fig. 5 und
- Fig. 7: eine Seitenansicht einer in den Spannbacken der Fig. 5 und 6 drehfest einsetzbaren Sechskant-Mutter für die Spannschraube mit einem Außen-Ringbund.

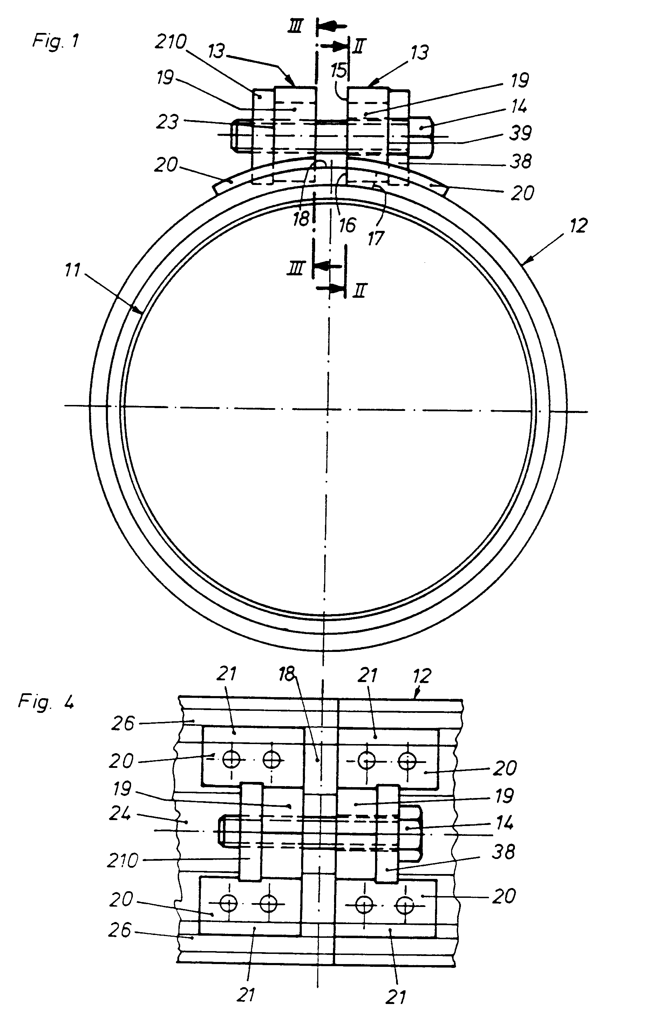

Die in Fig. 1 abgebildete Vorrichtung dient zur abgedichteten Verbindung der glattzylindrischen Enden von zwei Rohren (nicht gezeigt), welche z. B. Abwasserrohre aus Gußeisen oder Stahl sein können. Die Vorrichtung enthält eine Dichtmanschette 11 aus elastomerem Material und ein Schellenband 12 aus vorzugsweise Edelstahl, welches zum Kontraktieren der Dichtmanschette 11 dient. An jedem Ende des Schellenbandes 12 ist zu diesem Zweck ein im wesentlichen radial nach außen abstehender Spannbacken 13 befestigt, die mittels einer Spannschraube 14 gegeneinander gezogen werden können, um den Innendurchmesser des Schellenbandes 12 zu verkleinern. Im einzelnen ist der gem. Fig. 1 rechte Spannbacken 13 an dem einen Ende des Schellenbandes 13 so befestigt, daß sein linker Rand 15 mit dem einen Ende 16 des Schellenbandes 12 fluchtet, während der gem. Fig. 1 linke Spannbacken 13 in einem gewissen Abstand vom anderen Ende 17 des Schellenbandes 12 angeordnet ist. Dadurch wird ein Überbrückungsabschnitt 18 zwischen den Spannbacken 13 ausgebildet, so daß der gesamte Umfang der Dichtmanschette 11 vom Schellenband 12 umfaßt ist.

Das Schellenband 12 weist eine mittig angeordnete, im Schnitt bogenförmige, flache umlaufende Sicke 24 sowie randseitig je eine umlaufend Sicke 26 mit im wesentlichen V-förmigem Querschnitt auf. Den Sicken 26 folgen nach außen radial nach innen ragende Flansche 28.

Die Dichtmanschette 11 hat an ihrer Außenseite eine Querschnitts-Kontur, die derjenigen der Innenseite des Schellenbandes 12 entspricht. Dies bedeutet, daß die Sicke 24 des Schellenbandes 12 in eine ringförmige Vertiefung am Außenumfang der Dichtmanschette 11 passend eingreift. Desgleichen greifen die Sicken 26 des Schellenbandes 12 passend in Randabschnitte 32 der Dichtmanschette 11 mit im wesentlichen V-förmigem Querschnitt ein. Axial nach innen folgt den Randabschnitte 32 jeweils eine ringförmige Dichtlippe 34 und in einem gewissen axialen Abstand befinden sich dann nach innen abgeschrägte Innenwandabschnitte 35 mit zunehmend kleiner werdenden Innendurchmesser, welche an einem mittige angeordneten, radial nach innen ragenden, ringförmigen Steg 36 enden. Dieser Steg 36 dient als Anschlag für die Stirnenden der zu verbindenden Rohre.

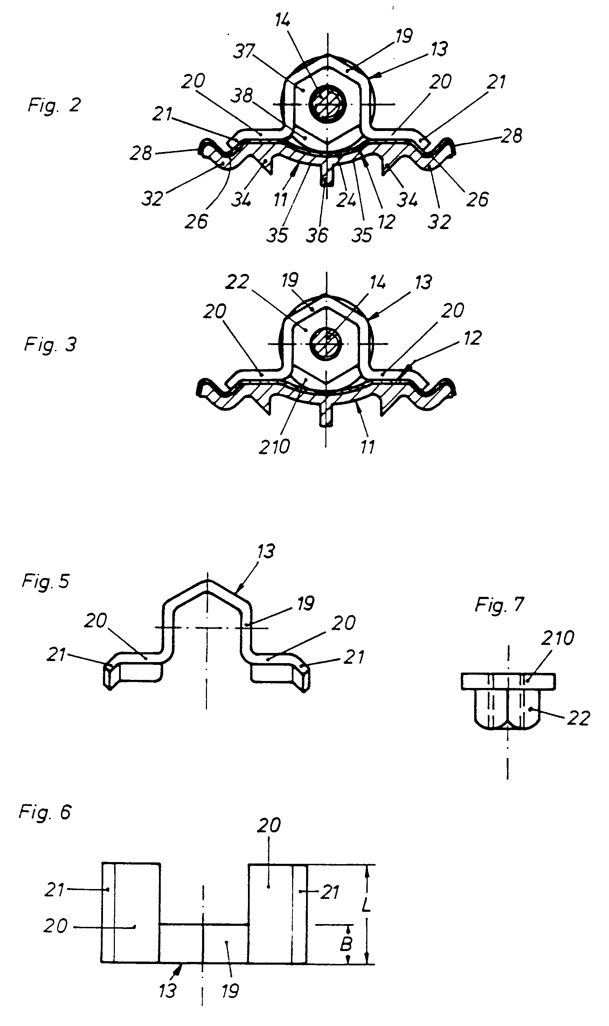

Die zwei Spannbacken 13 sind beim Ausführungsbeispiel gleichartig. Sie weisen jeweils einen dreikantig ausgebildeten Bügel 19 auf, von welchem nach außen Befestigungslaschen 20 abgewinkelt sind. Die Befestigungslaschen 20 sind in Umfangsrichtung des Schellenbandes 12 bogenförmig ausgebildet und ihre Länge L (Fig. 6) beträgt ein Mehrfaches der Breite B des Bügels 19 jeder Spannbacke 13. An den äußeren Längsrändern der Befestigungslaschen 20 sind abgewinkelte Flansche 21 vorgesehen. Die Befestigung der Spannbacken 13 am Schellenband 12 erfolgt vorzugsweise über jeweils vier Schweißpunkte, die paarweise an jeder Befestigungslasche 20 in Umfangsrichtung in relativ großem Abstand voneinander positioniert sind (Fig. 4).

In den Bügel 19 der gem. Fig. 1 linken Spannbacke 13 ist passend eine Sechskant-Mutter 22 mit einem Außenringbund 210 drehfest eingesetzt, in welche der Gewindeschaft der Spannschraube 14 eingedreht ist. Der Außenringbund 210 der Sechskant-Mutter 22 liegt am äußeren Stirnrand 23 des Bügels 19 der gem. Fig. 1 linken Spannbacke 13 an und taucht in die mittige, umlaufende Sicke 24 des Schellenbandes 12 ein.

In den Bügel 19 der gem. Fig. 1 rechten Spannbacke 13 ist eine Sechskant-Führungshülse 37 mit einem Außen-Ringbund 38 passend, d.h. drehfest eingesetzt. Der Gewindeschaft der Spannschraube 14 erstreckt sich axial verschieblich durch die Bohrung dieser Führungshülse 37. Der Außenringbund 38 liegt am äußeren Stirnrand 39 des Bügels 19 der rechten Spannbacke 13 an und er taucht gleichfalls in die mittige umlaufende Sicke 24 des Schellenbandes 12 ein. Der Außen-Ringbund 38 der Sechskant-Führungshülse 37 dient als Auflager für den Mitnehmer eines Schraubwerkzeugs zur Betätigung der Spannschraube 14. Die Sechskant-Mutter 22 bzw. die Sechskant-Führungshülse 37 werden jeweils an vier Seiten passend von dem Bügel 19 der zugeordneten Spannbacke 13 erfaßt.

Die Flansche 21 an den Befestigungslaschen 20 greifen in die randseitigen Sicken 26 des Schellenbandes 12 ein.

Beim Einstecken der zwei zu verbindenden Rohre in die Dichtmanschette 11 werden die Dichtlippen 34 nach innen gebogen und die schrägen Innenwandabschnitte 35 dienen als Führung für die Rohrenden, bis die Stirnenden der Rohre an dem ringförmigen Steg 36 anliegen. Zur Herstellung der abgedichteten Rohrverbindung wird dann das Schellenband 12 mittels der Spannschraube 14 in Umfangsrichtung zusammengezogen und dadurch die Dichtmanschette 11 kontraktiert. Da der Gewindeschaft der Spannschraube 14 über den größten Teil seiner Länge in die Sechskant-Mutter 22 eingreift und durch die Sechskant-Führungshülse 37 geführt ist, ist die Gefahr einer Verbiegung der Spannschraube 14 beim Kontraktieren des Schellenbandes 12 praktisch ausgeschlossen. Es wird noch bemerkt, daß bei der fertigen Rohrverbindung die inneren Ränder der Flansche 28 des Schellenbandes 12 gegenüber dem Außenumfang der verbundenen Rohre ein radiales Spiel einhalten. Dadurch ist eine Schallbrücke über das Schellenband 12 von einem Rohr zum anderen vermieden.

In Abweichung vom Ausführungsbeispiel ist es auch möglich, die Führungshülse für die Spannschraube 14 mit einem kreisringförmigen Querschnitt auszuführen und in einen bogenförmigen Bügel einer Spannbacke einzusetzten. Aus Gründen der Fertigungsvereinfachung wird jedoch die in den Figuren gezeigte und vorstehend beschriebene Version bevorzugt.

## Patentansprüche

1. Vorrichtung zum abgedichteten Verbinden der glattzylindrischen Enden zweier Rohre mit einer Dichtmanschette und einem Schellenband zum Kontrahieren der Dichtmanschette, das mit einer mittigen umlaufenden Sicke und an seinen Enden mit im wesentlichen radial nach außen abstehenden Spannbacken versehen ist, durch die sich eine Spannschraube zur Kontraktion des Schellenbandes erstreckt, wobei die Spannbacken durch die Spannschraube quer übergreifende Bügel mit nach außen abgewinkelten Befestigungslaschen gebildet sind, die am Schellenband angeschweißt sind und gegen das Schellenband abgewinkelte Flansche aufweisen, dadurch gekennzeichnet, daß
a) der Bügel (19) von wenigstens einem der zwei Spannbacken (13) kantig ausgebildet ist und eine Mutter (22) für die Spannschraube (14) mit entsprechend kantigem Außenumfang drehfest aufnimmt,
b) die Mutter (22) für die Spannschraube (14) mit einem Außen-Ringbund (210) versehen ist, der am äußeren Stirnrand (23) des kantigen Bügels (19) anliegt und in die mittige umlaufende Sicke (24) des Schellenbandes (12) eingreift,
c) der Bügel (19) des anderen Spannbackens (13) eine Führungshülse (37) für die Spannschraube (14) aufnimmt und die Führungshülse (37) einen Außen-Ringbund (38) aufweist, welcher am äußeren Stirnrand (39) dieses Bügels (19) anliegt und in die mittige umlaufende Sicke (24) des Schellenbandes (12) eintaucht und
d) das Schellenband (12) randseitig je eine, im Vergleich zur mittigen Sicke (24) schmale umlaufende Sicke (26) aufweist, in welche die Flansche (21) an den Befestigungslaschen (20) der Spannbacken (13) eingreifen.

2. Vorrichtung nach Anspruch 1, dadurch gekennzeichnet, daß auch der die Führungshülse (37) für die Spannschraube (14) aufnehmende Bügel (19) des anderen Spannbackens (13) kantig ausgebildet ist und die Führungshülse (37) einen entsprechend angepaßten kantigen Außenumfang aufweist.

3. Vorrichtung nach Anspruch 1 oder 2, dadurch gekennzeichnet, daß die Bügel (19) der Spannbacken (13) derart dreikantig ausgebildet sind, daß sie eine Sechskant-Mutter (22) bzw. eine Führungshülse (37) mit einem entsprechend sechskantigen Außenumfang an je vier Seiten passend übergreifen, während der restliche Teil der Sechskant-Mutter (22) bzw. Führungshülse (37) sich im wesentlichen in die mittige Sicke (24) des Schellenbandes (12) erstreckt.

4. Vorrichtung nach Anspruch 1, dadurch gekennzeichnet, daß sich die Befestigungslaschen (20) der Spannbacken (13) in entgegengesetzten Richtungen über die Bügel (19) hinaus um ein Mehrfaches der Bügelbreite (B) in Umfangsrichtung des Schellenbandes (12) erstrecken.

## Claims

1. Device for the sealed connection of the smooth cylindrical ends of two pipes with a sealing sleeve and a band clamp fitting for contraction of the sealing sleeve, said band clamp fitting being provided with a central circumferential bead and with clamping jaws protruding essentially radially outwards at its ends, through which clamping jaws a clamp bolt extends for contraction of the band clamp fitting, wherein the clamping jaws are formed by bows engaging obliquely over the clamp bolt with fastening straps angled outwards, which are welded onto the band clamp fitting and have flanges angled towards the band clamp fitting, characterised in that
a) the bow (19) of at least one of the two clamping jaws (13) is angular and non-rotatably receives a nut (22) for the clamp bolt (14) with a corresponding angular outer periphery;
b) the nut (22) for the clamp bolt (14) is provided with an outer collar (210), which abuts the outer face edge (23) of the angular bow (19) and engages into the central circumferential bead (24) of the band clamp fitting (12);
c) the bow (19) of the other clamping jaw (13) receives a guide bush (37) for the clamp bolt (14) and the guide bush (37) has an outer collar (38), which abuts the outer face edge (39) of this bow (19) and dips into the central circumferential bead (24) of the band clamp fitting (12); and
d) on its edge side, the band clamp fitting (12) has circumferential bead (26), which is narrow in comparison to the central bead (24) and into which the flanges (21) on the fastening straps (20) of the clamping jaws (13) engage.

2. Device according to Claim 1, characterised in that the bow (19) of the other clamping jaw (13) receiving the guide bush (37) for the clamp bolt (14) is also angular and the guide bush (37) has an appropriately matched angular outer periphery.

3. Device according to Claim 1 or 2, characterised in that the bows (19) of the clamping jaws (13) are of three-cornered construction so that they each fit over a hexagon nut (22) or a guide bush (37) with a corresponding hexagonal outer periphery on four sides, whereas the remaining portion of the hexagon nut (22) or guide bush (37) extends essentially into the central bead (24) of the band clamp fitting (12).

4. Device according to Claim 1, characterised in that the fastening straps (20) of the clamping jaws (13) extend in opposite directions beyond the bows (19) by a multiple of the bow width (B) in the peripheral direction of the band clamp fitting (12).

## Revendications

1. Dispositif de raccordement étanche des extrémités cylindriques lisses de deux tubes, comprenant une garniture d'étanchement et un collier de serrage destiné à la contraction de la garniture d'étanchement et pourvu d'une moulure circonférentielle centrale et, à ses extrémités, de mors de serrage qui font saillie pour l'essentiel vers l'extérieur dans le sens radial, et sont traversés par une vis de serrage en vue du resserrement du collier de serrage, les mors de serrage étant formés par des étriers coiffant transversalement la vis de serrage et munis de pattes de fixation coudées vers l'extérieur, rapportées par soudage sur le collier de serrage, et présentant des ailes coudées vers ledit collier de serrage, caractérisé par le fait que
a) l'étrier (19) d'au moins l'un des deux mors de serrage (13) est de réalisation polygonale et reçoit, avec verrouillage antirotation, un écrou (22) destiné à la vis de serrage (14) et doté d'un pourtour extérieur de configuration polygonale correspondante,
b) l'écrou (22) destiné à la vis de serrage (14) est pourvu d'un collet annulaire extérieur (210) qui porte contre le bord extrême externe (23) de l'étrier polygonal (19), et pénètre dans la moulure circonférentielle centrale (24) du collier de serrage (12),
c) l'étrier (19) de l'autre mors de serrage (13) reçoit une douille de guidage (37) destinée à la vis de serrage (14), et la douille de guidage (37) présente un collet annulaire extérieur (38) qui porte contre le bord extrême externe (39) de cet étrier (19), et s'enfonce dans la moulure circonférentielle centrale (24) du collier de serrage (12), et
d) le collier de serrage (12) comporte, dans sa zone marginale, une moulure circonférentielle respective (26) qui est étroite comparativement à la moulure centrale (24), et dans laquelle pénètrent les ailes (21) solidaires des pattes de fixation (20) des mors de serrage (13).

2. Dispositif selon la revendication 1, caractérisé par le fait que l'étrier (19) de l'autre mors de serrage (13), recevant la douille de guidage (37) destinée à la vis de serrage (14), est lui aussi de réalisation polygonale, et la douille de guidage (37) présente un pourtour extérieur polygonal adapté en conséquence.

3. Dispositif selon la revendication 1 ou 2, caractérisé par le fait que les étriers (19) des mors de serrage (13) sont d'une réalisation triangulaire telle qu'ils coiffent intimement, sur quatre côtés respectifs, un écrou hexagonal (22) ou une douille de guidage (37) à pourtour extérieur hexagonal correspondant, tandis que la partie restante considérée de l'écrou hexagonal (22) ou de la douille de guidage (37) s'engage, pour l'essentiel, dans la moulure centrale (24) du collier de serrage (12).

4. Dispositif selon la revendication 1, caractérisé par le fait que les pattes de fixation (20) des mors de serrage (13) s'étendent dans des directions opposées, au-delà des étriers (19), d'un multiple de la largeur (B) desdits étriers dans le sens périphérique du collier de serrage (12).
